(19) Europäisches Patentamt
European Patent Office
Office européen des brevets

(11) EP 0 722 103 B1

(12) FASCICULE DE BREVET EUROPEEN

(45) Date de publication et mention de la délivrance du brevet:
**26.03.2003 Bulletin 2003/13**

(51) Int Cl.[7]: **G02B 6/35**, G01L 9/00

(21) Numéro de dépôt: **96400043.4**

(22) Date de dépôt: **08.01.1996**

# (54) Dispositif optique pour application optoméchanique

Optische Vorrichtung für optomechanische Anwendung

Optical apparatus for opto-mechanical application

(84) Etats contractants désignés:
**DE GB IT**

(30) Priorité: **10.01.1995 FR 9500201**

(43) Date de publication de la demande:
**17.07.1996 Bulletin 1996/29**

(73) Titulaire: **OPSITECH Optical System on a chip
38054 Grenoble (FR)**

(72) Inventeurs:
- **Labeye, Pierre
F-38000 Grenoble (FR)**
- **Ollier, Eric
F-38100 Grenoble (FR)**

(74) Mandataire: **Kremer, Robert A.M. et al
BUREAU D.A. CASALONGA - JOSSE
Paul-Heyse-Strasse 33
80336 München (DE)**

(56) Documents cités:
**EP-A- 0 286 337**
**EP-A- 0 451 018**
**EP-A- 0 503 979**
**DE-A- 3 127 574**
**GB-A- 2 208 931**

- **TECHNISCHES MESSEN TM, vol. 58, no. 4, Avril 1991, MUNCHEN DE, pages 140-145, XP002002413 E.VOGES: "Integrierte Optik auf Glas und Silizium für Sensoranwendungen"**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 722 103 B1

Printed by Jouve, 75001 PARIS (FR)

## Description

Domaine technique auquel se rapporte l'invention

La présente invention concerne le domaine de l'optomécanique, c'est-à-dire l'ensemble des composants d'optique intégrée associés à une structure mécanique gravée dans le même matériau. Même si les domaines de l'optique intégrée et de la micromécanique, pris séparément, sont bien développés, l'union des deux, c'est-à-dire l'optomécanique, est une démarche récente.

La présente invention s'applique à l'optomécanique dans divers domaines, tels que les télécommunications optiques ou encore les capteurs optomécaniques (par exemple : accélérométrie optomécanique).

Etat de la technique

Toute fonction optomécanique passe nécessairement par le déplacement relatif de l'extrémité d'un guide optique par rapport à l'extrémité d'un autre guide optique. Dans le cas de la commutation optomécanique, ce déplacement est commandable extérieurement. Dans le cas des capteurs optomécaniques, c'est le phénomène physique à mesurer (accélération, vibration, etc.) qui va provoquer ce déplacement de l'extrémité du guide.

Par ailleurs, un système d'optomécanique utilisant de l'optique intégrée nécessite le dépôt de couches minces sur un substrat. De par les techniques et les matériaux utilisés, les couches ainsi réalisées présentent des contraintes dans leur épaisseur, liées par exemple à la différence de coefficient de dilatation en fonction de la température, contraintes qui peuvent être en outre inhomogènes. Il s'ensuit une déformation parasite du système, qui est gênante pour la réalisation de dispositifs optomécaniques. En général, l'optique intégrée ne peut se permettre de telles déformations, qui peuvent conduire à désaxer ou à décaler des structures de guide optique l'une par rapport à l'autre. En effet, dans de telles structures, des décalages de l'ordre du micron entraînent des pertes optiques importantes.

L'art antérieur propose, dans le domaine de l'optomécanique, des structures mécaniques avec une poutre contenant un guide optique, fixée à une extrémité à la structure fixe du dispositif et libre à l'autre extrémité.

Un tel dispositif est décrit dans le brevet français FR-A-2 660 444 (US-A-5 078 514). La structure du commutateur décrit dans ce brevet va être brièvement rappelée, en liaison avec la figure 1.

Le commutateur comprend une couche plane, ou structure guide 8 (qui peut être composée d'une ou plusieurs couches), qui est réalisée sur un substrat 10 par exemple en silicium monocristallin, et qui présente une face d'entrée E et une face de sortie S, obtenues par exemple par clivage. La structure guide 8 comporte par exemple une couche tampon 12 en oxyde de silicium (8 à 12 μm d'épaisseur), et une couche supérieure 16 en silice (2 à 10 μm d'épaisseur), cette dernière pouvant, pour certaines applications être remplacée par de l'air. La structure guide comprend également un microguide d'entrée 18 et deux microguides de sortie 20 et 22, en oxyde de silicium dopé par exemple par du phosphore, de 2 à 6 μm de hauteur et de 2 à 8 μm de large. Les microguides 18 et 20 sont parallèles à une direction x elle-même parallèle à la plus grande surface 8a de la couche plane ou structure guide 8, et ils sont disposés dans le prolongement l'un de l'autre et de part et d'autre d'un évidement 24 traversant la structure guide 8. Un autre microguide de sortie 22 est situé du même côté de l'évidement 24 que le microguide 20 et est adjacent à ce dernier. Ce microguide 22 comporte, du côté de la sortie S du commutateur, une partie 21, strictement parallèle au microguide 20 et, du côté de l'évidement 24, une partie 23 formant un angle rentrant A avec la partie 21, d'une valeur comprise entre 0,06° et 6° environ, cette valeur étant liée à la longueur de la poutre.

D'autres structures peuvent être utilisées, par exemple celles obtenues par échange d'ions dans des substrats de type verre, niobate de lithium ou par dépôts ou gravures de couches du type silice, $Si_3N_4$, $SiO_xN_y$, AsGa, InP, etc..., le confinement latéral dans le microguide n'étant pas forcément obtenu par gravure de la couche formant le microguide.

L'évidement 24 définit, dans la structure 8 fixe, une poutre flexible 26 orientée au repos parallèlement à la direction x, cette poutre pouvant se déformer dans l'évidement 24 selon une direction y, parallèle à la surface 8a de la structure guide (qui, elle, définit une partie fixe) et perpendiculaire à la direction x. Cette poutre 26 comprend une extrémité fixe 28, solidaire de la structure guide 8, et une extrémité libre 30 apte à se déplacer dans l'évidement 24. Dans le prolongement du microguide 18 d'entrée, un microguide central 32 s'étend sur toute la longueur de la poutre 26, son extrémité 33 débouchant à l'extrémité 30 de celle-ci.

La commutation du faisceau incident véhiculé par le microguide d'entrée vers le microguide de sortie 20 est assurée en amenant l'extrémité libre 33 du microguide central de la poutre en face et en coïncidence avec l'extrémité d'entrée 20a du microguide de sortie 20. La commutation vers le microguide de sortie 22 se fait en amenant l'extrémité libre 33 du microguide central en face et en coïncidence avec l'extrémité d'entrée 22a du microguide de sortie 22. La paroi interne de l'évidement 24, en regard de l'extrémité libre 30 de la poutre, est constituée de deux parties 34a et 34b formant un angle rentrant de valeur proche ou identique à l'angle A. Les déformations de la poutre pour amener celle-ci en coïncidence avec l'un ou l'autre des microguides de sortie, sont assurées, dans le mode de réalisation représenté sur la figure 1, à l'aide de condensateurs de capacité variable. A cet effet, les surfaces latérales de l'évidement 24, au niveau de la structure guide 8, orientées selon la direction x, sont équipées de métallisations

respectivement 36 et 46. Par ailleurs, les faces latérales de la poutre 26 en regard, orientées sensiblement selon la direction x lorsque celle-ci est au repos, sont équipées de métallisations respectivement notées 38 et 44. Les métallisations 36 et 38 sont reliées à une source d'alimentation électrique 40, les métallisations 44 et 46 sont reliées à une source d'alimentation électrique 48. L'application d'une tension convenable aux bornes de la paire de condensateurs ainsi formée crée une force capacitive orthogonale aux plans formés par les métallisations qui est sensiblement parallèle à la direction y et qui entraîne une déformation de la poutre 26 selon cette direction y. Cette force $F_C$ permet un déplacement latéral $y_C$ de l'extrémité libre de la poutre 26, selon y, qui est donné par l'équation :

$$y_C = 3/2 \cdot F_C \cdot h^{-1} \cdot \left(\frac{L}{l}\right)^3 \cdot E^{-1}$$

où E est le module d'Young, l la largeur de la poutre selon la direction y, L la longueur de la poutre selon la direction x et h l'épaisseur de la poutre selon la direction z.

Le procédé de fabrication de cette structure est détaillé dans le brevet mentionné ci-dessus en référence. Ce procédé fait intervenir :

- une étape de formation de la couche 12, par exemple par oxydation thermique du substrat 10,
- le dépôt d'une couche de silice par LPCVD ou par PECVD,
- une étape de gravure réalisée à travers un masque défini par photolithographie pour obtenir les microguides,
- une étape de dépôt de la couche 16 par technique de dépôt chimique en phase vapeur basse pression (LPCVD), ou assisté plasma (PECVD),
- des étapes de gravure anisotrope et isotrope du type gravure ionique réactive avec, soit du $CHF_3$, soit du $SF_6$ ; ces dernières étapes de gravure permettent de dégager la poutre 26 de son substrat.

Un premier problème rencontré avec ce type de dispositif est la nécessité, lorsque l'on désire réaliser une commutation de n guides optiques vers m guides optiques, d'utiliser au moins deux poutres telles que celles décrites ci-dessus, montées en cascade.

Par ailleurs, l'étape de réalisation de la poutre en particulier en silice, par dépôt PECVD, avec différents dopages en phosphore, conduit à un gradient de contraintes selon la direction verticale z, qui est à l'origine d'une déformation du système. Ceci est illustré sur la figure 2a, où les références numériques identiques à celles de la figure 1 y désignent les mêmes éléments. Cette figure représente la structure obtenue avant l'étape de dégagement de la poutre. Sur cette figure 2a, $\sigma_2$ désigne la contrainte à l'interface substrat 10-couche mince (12, 32, 16) et $\sigma_1$ désigne la contrainte à la surface de la couche mince. Du fait des différences de nature entre les sous-couches 12, 32 et 16, ainsi que des différences de dopage en phosphore dans la couche, il apparaît un gradient de contraintes dans la couche mince : la contrainte $\sigma_2$ est inférieure à la contrainte $\sigma_1$. Ceci conduit, lorsque l'on dégage la poutre 26, c'est-à-dire lorsque l'on creuse la cavité 24 sous la poutre 26, à une déviation verticale de cette poutre qui désaxe complètement les guides optiques d'entrée et de sortie, ce qui rend le commutateur optique parfaitement inopérant, comme illustré sur la figure 2b.

D'autre part, la commutation nécessite la déformation de la poutre (dans le plan xy, voir figure 1) , dont une extrémité est rattachée à la partie fixe, ce qui, combiné au fait que la poutre contient un microguide et doit donc avoir des dimensions minimale, entraîne que la partie mobile nécessite une énergie de commande élevée lors de son mouvement.

Les problèmes qui se posent dans le domaine des capteurs, par exemple des capteurs de vibration, sont les mêmes que ceux qui se posent pour les commutateurs en ce qui concerne les déformations (voir figures 2a et 2b). Le fait que, là encore, un signal soit obtenu par déplacement d'une poutre rattachée à une partie fixe, poutre qui, pour les mêmes raisons que ci-dessus, doit avoir des dimensions minimales, entraîne une limitation dans la sensibilité de ces capteurs.

En outre, dans le domaine des capteurs, l'art antérieur propose une structure mobile comportant un seul guide optique. La structure mobile se déplace sous l'action d'une force extérieure. Ce dispositif module l'intensité lumineuse le traversant mais cette modulation ne permet pas de remonter au sens du déplacement.

Par ailleurs, le document EP-A-0 503 979 décrit un commutateur optique dans lequel un coulisseau indépendant inséré entre deux zones d'une partie fixe présente des passages oblongues traversés par des barres et est relié à un organe mécanique de commande de déplacement, les zones fixes et le coulisseau étant munis de guides optiques commutables entre eux lorsque le coulisseau est déplacé en glissant transversalement sur les barres et contre les flancs adjacents desdites zones.

## Exposé de l'invention

Afin de résoudre les problèmes précités, la présente invention a pour objet un dispositif optomécanique comportant, dans une structure guidante réalisée en optique intégrée, une partie fixe et une partie mobile, cette partie mobile étant munie de k micro-guides et étant située entre i microguides de sortie formé dans la partie fixe et j microguides d'entrée formés également dans la partie fixe.

Selon l'invention, ce dispositif optomécanique comprend au moins une partie mobile comprenant une masse qui n'est reliée que par des bras de fixation à la partie fixe ; la partie fixe, la masse et les bras de fixation sont formés d'une pièce ; et au moins un bras de fixation

présente une souplesse suffisante suivant une première direction, de manière à ne pas entraver le déplacement de la masse selon cette direction, et une rigidité suffisante selon une deuxième direction, de manière à limiter le déplacement de la masse selon cette deuxième direction. Ainsi, un tel dispositif permet la commutation d'un faisceau lumineux d'un des j microguides d'entrée vers au moins un des i microguides de sortie via au moins un des k micro-guides de la partie mobile.

Avec une telle structure, il est possible de choisir les microguides d'entrée et de sortie en nombre 1 et j quelconques : il n'est plus nécessaire de réaliser des cascades de dispositifs de commutation. Enfin, dans le cas où ce dispositif est utilisé dans un capteur, la sensibilité de ce dernier se trouve accrue du fait, également, du découplage des deux parties mobile et fixe. En outre, les bras de fixation de la partie mobile et la partie fixe ne sont pas traversés par des guides d'onde, il est donc possible de les dimensionner sans être tributaire de la présence de ces microguides.

Il est possible de réaliser des structures en cascade, avec des parties mobiles reliées à la partie fixe uniquement par des bras de fixation, ces différentes parties mobiles ne nécessitant alors que peu d'énergie pour être déplacées ou offrant, dans le cas du capteur, une plus grande sensibilité.

Le dispositif selon l'invention peut avantageusement comprendre N parties mobiles $M_1$, $M_2$ ..., $M_n$ reliées à la partie fixe, ces parties mobiles étant situées entre i microguides de sortie formés dans la partie fixe et j microguides d'entrée formés également dans la partie fixe, les parties mobiles comportant chacune une masse qui n'est reliée que par dés bras de fixation à la partie fixe de façon à permettre le déplacement de la masse dans une première direction et limiter son déplacement selon cette deuxième direction, la masse $M_1$ comportant $k_1$ microguides de façon à pouvoir commuter un faisceau lumineux d'un des j microguides d'entrée vers un des $k_2$ microguides de la masse $M_2$, chaque masse $M_n$ (n supérieur ou égale à 2) comportant $k_n$ microguides de façon à pouvoir commuter un faisceau lumineux d'un des $k_{n-1}$ microguides de la masse $M_{n-1}$ vers un des $k_{n+1}$ microguides de la masse $M_{n+1}$, la masse $M_N$ comportant $k_N$ microguides de façon à pouvoir commuter un faisceau lumineux d'un des $k_{N-1}$ microguides de la masse $M_{N-1}$ vers un des i microguides de sortie.

Selon l'invention, les bras peuvent ne pas être traversés par des guides d'onde et on peut les dimensionner indépendamment de la présence de microguide.

Dans le cadre de la présente invention, afin de diminuer encore d'éventuels gradients de contrainte résiduelle dans une structure mobile, il est possible de relier cette structure par au moins deux points aux bras de fixation.

Selon l'invention, les première et deuxième directions précitées peuvent avantageusement être perpendiculaires entre elles.

Selon l'invention, un bras de fixation peut avoir diverses formes :

- une forme d'équerre avec deux segments perpendiculaires l'un par rapport à l'autre,
- une forme en "U" avec une branche rajoutée de manière sensiblement perpendiculaire à l'extrémité libre de chaque branche latérale du "U",
- une forme droite,

Par ailleurs, selon un autre mode particulier de réalisation de l'invention, au moins deux bras de fixation peuvent relier une même partie mobile à la partie fixe par l'intermédiaire d'un cadre déformable.

Afin de résoudre, dans le cadre de la présente invention, le problème du poids d'une partie mobile, cette dernière peut comporter, en dehors des microguides quelle contient, au moins un évidement permettant de l'alléger.

L'invention a également pour objet un commutateur optomécanique comportant un dispositif tel que décrit ci-dessus, et des moyens pour commander le déplacement de la ou d'au moins une des parties mobiles.

Ces moyens peuvent être des moyens électrostatiques, par exemple des électrodes de commande appliquées sur les bras de la partie mobile ou d'au moins une partie mobile.

Selon une variante, les moyens de commande de déplacement d'une partie mobile peuvent être constitués par un peigne électrostatique relié à cette partie mobile.

L'invention a également pour objet un capteur optomécanique comportant un dispositif tel que décrit ci-dessus, avec selon un mode avantageux i=2, j=1 et k=2.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un commutateur optomécanique selon l'art antérieur,
- les figures 2a et 2b représentent des étapes de réalisation d'un commutateur optomécanique selon l'art antérieur, avant (figure 2a) et après (figure 2b) gravure du substrat,
- les figures 3a et 3b illustrent le principe d'un commutateur selon l'invention, pour un microguide d'entrée et deux microguides de sortie,
- la figure 4 représente un dispositif dont la partie mobile comporte deux guides courbes avec système de commande électrostatique,
- la figure 5a représente un commutateur optomécanique avec peigne électrostatique,

- les figures 5b et 5c illustrent le dimensionnement d'un peigne électrostatique,
- la figure 6 représente une partie mobile d'un commutateur ou d'un capteur relié à la partie fixe par des bras en forme de cadre déformable,
- la figure 7 représente une partie mobile d'un commutateur ou d'un capteur relié à la partie fixe par des bras en forme de "U",
- la figure 8 représente une partie mobile d'un commutateur ou d'un capteur relié à la partie fixe par des bras de forme droite,
- la figure 9 représente de façon plus détaillée un bras de compensation en forme de "U",
- la figure 10 représente une partie mobile, avec ses bras de fixation, ayant une forme assurant un bon guidage et minimisant son poids,
- la figure 11 représente un commutateur ou un capteur optique à trois voies,
- la figure 12 représente un dispositif permettant la commutation parallèle de deux guides d'entrée sur quatre guides de sortie,
- la figure 13 représente deux parties mobiles indépendantes, en cascade,
- la figure 14 représente un commutateur 2x2 à une seule partie mobile,
- la figure 15 représente un accéléromètre ou capteur de vibration optique,
- les figures 16a et 16b représentent, en fonction du déplacement de la partie mobile, les signaux optiques obtenus par les guides de sortie, et la différence entre ces deux signaux.

## Description détaillée de modes de réalisation de l'invention

Le principe de l'invention va être exposé en liaison avec les figures 3a et 3b. Ces figures représentent, en vue de dessus, un dispositif comportant une partie fixe 50 et une partie mobile 52, la partie fixe comportant un microguide d'entrée 54 et deux microguides de sortie 56, 58. La structure fixe 50 est en fait similaire à celle décrite ci-dessus en liaison avec la figure 1. Seule la forme de la zone gravée est modifiée, de façon à dégager une structure mobile 52 qui ne soit plus reliée directement à la zone 60 de la partie fixe qui contient le microguide d'entrée 54. Par contre, la partie mobile 52 est reliée à la partie fixe 50 par des bras de fixation 62, 64, 66, 68. Ces bras doivent permettre le déplacement de la partie mobile suivant une première direction. Dans le cas des figures 3a et 3b, cette première direction, repérée par XX', est contenue dans un plan horizontal et avantageusement perpendiculaire au microguide d'entrée 54. La partie mobile 52 contient deux microguides 70, 72. Le guide 70 a une extrémité en face du microguide d'entrée 54 et l'autre extrémité en face du microguide de sortie 56, lorsque la structure est dans une position I, illustrée par la figure 3a. Lors du déplacement de la structure, suivant XX', dans une position II, illustrée par la figure 3b, le premier microguide 70 quitte sa position en regard des microguides d'entrée et de sortie 54, 56, mais le second microguide 72 vient dans une position dans laquelle une de ses extrémités est en face du microguide d'entrée 54 et dans laquelle sa deuxième extrémité vient en face du microguide de sortie 58. Pour passer de la position I à la position II, des moyens de déplacement, non représentés sur les figures 3a et 3b, peuvent être prévus (c'est le cas du commutateur optique). Le déplacement de la partie mobile 52 peut également avoir lieu sou l'influence d'une perturbation extérieure qui est à identifier et à mesurer (c'est le cas du capteur).

Dans tous les cas, les bras de liaison 62, 64, 66, 68 ne contiennent pas de guide optique, ils peuvent donc avoir une largeur assez faible. Par conséquent, dans le cas du commutateur optique, l'énergie nécessaire au déplacement de la partie mobile sera beaucoup plus faible que dans les dispositifs selon l'art antérieur.

Par ailleurs, il est possible de relier la structure mobile par au moins deux points à la structure fixe, ce qui permet de minimiser les gradients de contrainte résiduelle qui peuvent être présents dans la partie mobile. Sur les figures 3a et 3b, on a quatre points de liaison repérés par les lettres A, B, C, D.

Les microguides optiques de la partie mobile peuvent avoir des formes très variables. Sur les figures 3a et 3b, l'un des deux microguides est rectiligne, tandis que le second présente un coude.

Il est également possible d'avoir des microguides courbes dans la partie mobile, ainsi qu'illustré sur la figure 4, où le déplacement a lieu toujours suivant la direction XX' contenue dans le plan de la figure et avantageusement perpendiculaire au microguide d'entrée.

Dans le cas du commutateur optique, des moyens doivent être prévus pour déplacer la partie mobile par rapport à la partie fixe et réaliser la commutation entre diverses positions. A cette fin, il est possible, comme illustré sur la figure 4, d'utiliser des électrodes de commande telles que les électrodes 78, 80, 82, 84. Certaines de ces électrodes sont déposées sur la partie fixe et d'autres sur la partie mobile. Elles sont commandées par des sources d'alimentation électrique 86, 88. Sur la figure 4 un seul ensemble d'électrodes de commande a été représenté, en relation avec un bras de liaison de la partie mobile à la partie fixe. D'autres électrodes peuvent être déposées sur les autres bras, et sur les autres zones de la partie fixe située en face de ces autres bras. Des sources d'alimentation électrique correspondantes y seront associées.

Selon une variante, il est possible de diminuer la tension de commande en introduisant un peigne électrostatique, ainsi qu'illustré sur la figure 5a. Sur cette figure, les microguides d'entrée, de sortie et de commutation ainsi que les bras de liaison sont identiques à ceux représentés sur la figure 4. Par contre, la commutation est assurée par un peigne électrostatique désigné par

la référence 90. Ce peigne est constitué d'une série de dents 92-1, ..., 92-6 et 94-1, ... 94-6 alternativement reliées à une partie centrale mobile 100 et à la partie fixe. Ces dents portent chacune des électrodes de commande 96-1, 96-2,..., 96-12 et 98-1, ... 98-12. Les dents et les électrodes sont réparties de part et d'autre de la poutre centrale 100, et les électrodes sont associées par paire à des sources d'alimentation électrique 102-1, ..., 102-6, et 104-1, ..., 104-6. Il est ainsi possible de dimensionner séparément les bras de maintien de la structure mobile et le système électrostatique, ce qui permet de diminuer encore la tension de commande du déplacement. Ceci permet en outre de séparer les problèmes liés aux contraintes présentes dans les couches, des problèmes de tension de commande, ces derniers étant résolus en dimensionnant correctement le peigne électrostatique.

Ce dimensionnement va être brièvement expliqué en liaison avec les figures 5b et 5c. Dans le cas de la figure 5b, deux électrodes sont en regard, à une distance e l'une de l'autre, S représentant la surface de chaque électrode (S=Lxh où L et h sont respectivement la longueur et la largeur de l'électrode). Soit V la tension appliquée en volts entre les deux électrodes et $\varepsilon_0$ la permittivité du vide ($\varepsilon_0$=8,85.$10^{-12}$F/m). La force d'attraction électrostatique est donnée par F :

$$F=1/2\varepsilon_0 S(V/e)^2.$$

Si on considère une poutre unique, comme dans le cas de l'art antérieur, alors une des deux électrodes est positionnée sur le flanc de la poutre et L et h représentent respectivement la longueur et la hauteur de la poutre.

Dans le cas d'un peigne électrostatique à n dents (voir figure 5c) 95-1, 95-2,..., 95-n, chaque dent 95-i porte deux électrodes 91-i et 93-i et chacune de ces électrodes est en regard d'une électrode 87-i et 89-i montée sur la partie fixe. $V_i$ représente la tension entre l'électrode 87-i et l'électrode 91-i et $V'_i$ représente la tension entre l'électrode 93-i et l'électrode 89-i. La force F permettant de dévier la structure mobile vers la gauche de la figure 5c est donnée par :

$$F=1/2\varepsilon_0 \sum_{i=1}^{n}\left(L_i.h.(V_i/e_i)^2\right).$$

$L_i$ et $e_i$ représentant la longueur des électrodes situées de part et d'autre de la dent 95-i et la distance entre l'électrode 87-i et l'électrode 91-i.

La force F' permettant de dévier la structure vers la droite de la figure 5c est égale à :

$$F'=1/2\varepsilon_0 \sum_{i=1}^{n}\left(L'_i.h'.(V'_i/e'_i)^2\right)$$

Si on prend par exemple n dents de peigne identiques, de même longueur L, de même hauteur h et de même tension V, la force est alors donnée par :

$$F=n/2\varepsilon_0 Lh(V/e)^2.$$

La force est donc n fois plus grande. Ou alors, pour une force donnée, la tension nécessaire est $\sqrt{n}$ fois plus petite. Un peigne électrostatique permet donc de diminuer la tension de commande.

Les bras de maintien peuvent avoir des formes diverses. Sur les figures 3a à 5a, les bras de maintien ont une forme d'équerre, avec deux segments sensiblement perpendiculaires l'un par rapport à l'autre. Les bras de maintien peuvent avoir aussi la forme illustrée sur la figure 6. Sur cette figure, deux bras 106, 108 fixés à la partie mobile, relient cette dernière à la partie fixe par l'intermédiaire d'un cadre déformable 110, lui-même relié à la partie fixe par un élément de liaison 112. La même structure est prévue de l'autre côté de la partie mobile. Ce dispositif à base de cadres déformables permet à la partie mobile, lorsqu'elle est libérée (par gravure) de son substrat, de se déformer sans engendrer de désalignement parasite des guides optiques, ni de déformation importante, par exemple de flambement mécanique, des bras de maintien. Une commande électrostatique peut être introduite sur les parois 113 de ce cadre déformable.

Selon un mode de réalisation illustré sur la figure 7, les bras de liaison peuvent être en forme de "U" 114, 116, 118, 120, avec une branche 122, 124, 126, 128, 130, 132, 134, 136 rajoutée à chaque extrémité libre du "U" de manière sensiblement perpendiculaire à la branche latérale correspondante du "U". Selon un autre mode de réalisation illustré sur la figure 8, quatre bras droits 138, 140, 142, 144 prolongent la partie mobile 137 en direction de la partie fixe.

Les bras sont de préférence rigides dans le sens vertical (direction perpendiculaire au plan des figures 3a à 8) et souples dans le sens de déplacement de la partie mobile. Sur la figure 9 est représenté un bras de maintien avec un corps central 146 en forme de "U" et une branche 148, 150 rajoutée à l'extrémité libre de chaque branche latérale du "U", de manière sensiblement perpendiculaire à cette branche. Il est alors possible de jouer sur la géométrie des bras en augmentant le facteur de forme hauteur/largeur, la hauteur h et la largeur 1 étant identifiées sur la figure 9 comme étant la hauteur de la section du bras de fixation dans une coupe verticale (suivant un plan parallèle à zx), la largeur 1 étant la largeur du bras de fixation dans la même

coupe verticale. En jouant sur ce facteur de forme, on peut obtenir une souplesse suffisante, dans le plan xy (contenant la première direction), pour ne pas entraver les déplacements de la partie mobile dans ce même plan et une rigidité suffisante, suivant la direction z, pour limiter les déformations éventuelles de la partie mobile suivant cette dernière direction (appelée aussi deuxième direction). Ce procédé, qui consiste à modifier la hauteur et la largeur de la section d'un bras de fixation peut être appliqué à tout bras de forme droite (comme sur la figure 8) ou en forme de cadre (comme sur la figure 6), ou en forme d'équerre (comme sur la figure 4).

La partie mobile peut avoir diverses formes. Elle a été représentée, sur les figures 3a à 8, comme ayant une forme sensiblement rectangulaire. Mais il est possible de lui donner toute autre forme, en particulier une forme optimisée pour minimiser son poids. Ainsi, comme représenté sur la figure 10 où les bras de fixation sont désignés par les références 154, 156, 158, 160, la partie mobile peut comporter deux microguides 162, 164 et présenter une forme assurant un bon guidage et minimisant son poids, notamment du fait d'un évidement 166 entre les deux microguides 162, 164. La minimisation du poids permet de diminuer l'inertie du système, et donc d'augmenter la vitesse de commutation tout en diminuant la sensibilité du commutateur à la gravité. Dans le cas des capteurs, il est par contre possible d'augmenter la masse mobile afin d'augmenter la sensibilité du capteur.

Sur les figures 3a à 10 ont été représentés des systèmes de commutation avec deux guides de sortie. Il est possible de généraliser l'enseignement de l'invention à la commutation à i guides de sortie, comme illustré sur la figure 11. Dans ce cas, la partie mobile 163 contiendra par exemple i guides, chacun ayant une extrémité destinée à venir en face du microguide d'entrée 165, l'autre extrémité venant en face de l'un des microguides de sortie, pour une des i positions de la partie mobile. Dans le cas du commutateur à commande électrostatique, la modulation de la tension entre deux électrodes voisines permettra de moduler un déplacement correspondant de la partie mobile.

Comme illustré sur la figure 12, une même structure mobile peut comporter plusieurs guides permettant la commutation de plusieurs microguides d'entrée en parallèle. La figure 12 est limitée au cas de deux microguides d'entrée 167, 168, mais il est possible d'utiliser un dispositif équivalent pour j microguides d'entrée, avec j>2. L'avantage de ce dispositif est qu'il n'y a aucune augmentation de la force de commande, les bras de maintien étant indépendant de la structure optique employée.

Par ailleurs, comme illustré sur la figure 13, il est possible de monter en cascade des structures mobiles 170, 172 qui peuvent être soit reliées entre elles (une au moins étant reliée à la partie fixe), soit reliées indépendamment l'une de l'autre à la partie fixe du dispositif. C'est ce montage indépendant qui est illustré sur la figure 13.

Le dispositif illustré sur la figure 13 peut être généralisé à un dispositif optomécanique comportant, dans une structure guidante réalisée en optique intégrée une partie fixe, semblable à celle de la figure 13, et N parties mobiles $M_1$, $M_2$, ..., $M_N$. Ces parties mobiles peuvent être soit reliées entre elles, soit reliées indépendamment à la partie fixe du dispositif. Toutes les parties mobiles sont situées en cascade entre i microguides de sortie et j microguides d'entrée, tous formés dans la partie fixe. Les bras de fixation de chaque partie mobile sont semblables à ceux qui ont déjà été décrits ci-dessus, notamment en liaison avec les figures 3a à 13. Chaque masse Mn comporte $k_n$ microguides. Ces microguides sont disposés de façon à pouvoir commuter un faisceau lumineux d'un des $k_{n-1}$ microguides de la masse $M_{n-1}$, située d'un côté de la masse $M_n$, vers un des $k_{n+1}$ microguides de la masse $M_{n+1}$, située de l'autre côté de la masse $M_n$.

Selon une autre variante, illustrée sur la figure 14, il est possible de réaliser la commande de j microguides d'entrée vers i microguides de sortie, l'unique partie mobile 174 comportant alors ixj microguides, chacun pouvant relier les extrémités de deux guides fixes (un guide d'entrée, un guide de sortie) pour une position particulière de la partie mobile.

Par ailleurs, la structure utilisée pour le commutateur optique, lors de la commutation de microguides d'entrée vers des microguides de sortie peut être utilisée pour réaliser un capteur optomécanique d'accélération ou de vibration. Il peut être avantageux dans cette application de rapprocher les positions des microguides de sortie. Un capteur comportant j=1 microguide d'entrée, i=2 microguides de sortie et k=2 microguides dans une masse mobile est illustré sur la figure 15. Une partie mobile 176 comportant deux microguides courbes 178, 180 peut subir des déplacements suivant une direction XX' contenue dans le plan de la figure et avantageusement perpendiculaire au microguide d'entrée, déplacements qui peuvent être induits par toute force extérieure dont on cherche à détecter la présence. Dans le cas d'un tel déplacement, la lumière véhiculée par le microguide d'entrée se couple plus vers l'un ou l'autre des microguides de sortie, en fonction du sens du déplacement. Là aussi, comme il n'y a aucun guide relié à la partie fixe, on peut utiliser des bras de maintien très fins, ce qui permet une sensibilité accrue du système.

La figure 16a représente les signaux en sortie du microguide 182 (signal $S_1$) et du microguide 184 ($S_2$), en fonction du déplacement $\delta$ de la partie mobile. La différence entre ces deux signaux est représentée sur la figure 16b, toujours en fonction du déplacement $\delta$ de la partie mobile. On obtient ainsi un signal proportionnel au déplacement de la structure mobile, lui-même proportionnel à l'accélération appliquée au dispositif. On voit, d'après la figure 16b, qu'il est possible de détecter le sens de déplacement de la partie mobile, par rapport à une position par exemple au repos de cette dernière,

dans laquelle les signaux de sortie sont identiques. Les microguides de sortie 182, 184 sont par ailleurs reliés à des moyens de détection d'un faisceau qui est transmis via les microguides 178, 180. Ces moyens de détection, connus par ailleurs de l'homme de l'art, ne sont pas représentés plus en détail sur la figure 15. En outre, il est possible de relier ces moyens de détection à des moyens de traitement des signaux et éventuellement des moyens d'affichage.

Dans le cas du capteur optomécanique qui vient d'être décrit, l'invention apporte une sensibilité accrue du système mécanique, et permet de détecter le sens de déplacement de la structure. Le fait qu'il n'y ait aucune contrainte optique de dimensionnement des bras de maintien permet, en jouant sur la géométrie de ces bras, de réaliser par exemple des accéléromètres sensibles à l'accélération dans une direction, et insensible dans les deux autres directions perpendiculaires, ce qui n'est pas le cas d'un accéléromètre fonctionnant à l'aide d'un aiguillage optique.

Tous les dispositifs qui ont été décrits ci-dessus (commutateurs, capteurs) peuvent être réalisés à l'aide de procédés connus, tels que celui mentionné ci-dessus en liaison avec la description de l'art antérieur, et mettant en oeuvre par exemple les techniques LPCVD, PECVD, gravure anisotrope et isotrope du type gravure ionique réactive.

L'exemple suivant est proposé pour l'application numérique concernant le commutateur optomécanique. La structure optique peut être par exemple réalisée en trois couches déposées sur un substrat, par exemple en silicium. Les trois couches peuvent être par exemple en silice dopée au phosphore déposée en PECVD, la couche centrale ayant un indice supérieur aux deux couches qui l'entourent pour assurer le confinement de la lumière. Les différentes gravures des couches nécessaires à la définition des guides et de la structure mobile peuvent être réalisées en RIE. La hauteur verticale de la structure optique est typiquement de 25 μm.

Dans le cas du commutateur proposé dans le brevet antérieur FR-A-2 660 444, la force répartie que l'on doit appliquer le long de la poutre pour obtenir un certain déplacement de l'extrémité libre est donnée par la relation :

$$F = \frac{2Ehl^3\delta}{3L^3}$$

où E est le module d'Young du matériau utilisé pour la poutre, h est la hauteur de la poutre, l la largeur de la poutre, δ est le déplacement de l'extrémité libre de la poutre, L est la longueur totale de la poutre.

Les dimensions de la poutre mobile sont typiquement de quelques millimètres de long par 25 μm de haut et environ 25 à 30 μm de large. Une largeur moins grande perturberait le guidage optique dans la poutre et entraînerait des pertes parasites. En supposant une poutre en silice de module d'Young $E=7.10^7$ Pa, de longueur L=2 mm, de hauteur h=25 μm, de largeur l=30μm, la force nécessaire pour déplacer l'extrémité libre de la poutre de δ=10μm est de : $F=4.10^{-5}$N.

Dans le cas d'une force électrostatique créée par une tension appliquée sur des électrodes placées de part et d'autre de la poutre, la tension à appliquer est donnée par la formule :

$$V=e\sqrt{\frac{2F}{\varepsilon_0 Lh}}$$

où V est la tension entre les électrodes, e la distance entre les électrodes, $\varepsilon_0$ la permittivité du vide et L la longueur de la poutre.

En prenant $\varepsilon_0=8{,}85.10^{-12}$F/m, une distance interélectrode de 30μm et les autres paramètres tels que déjà définis ci-dessus, on obtient une tension de V=400 volts.

En prenant maintenant un commutateur basé sur la même technologie et les mêmes dimensions de guide, et utilisant l'invention proposée, on relie la partie mobile à la partie fixe à l'aide de quatre bras d'une largeur l de 5 μm et de même longueur L=2 mm, et la force nécessaire à la déviation de quatre bras sera alors donnée par :

$$F = \frac{8Ehl^3}{L^3\delta} = 2{,}2.10^{-6}\ N$$

La force à appliquer est donc 18 fois plus faible. De plus, cette force peut être répartie sur les quatre bras et la force à appliquer sur chaque bras est alors encore quatre fois plus faible.

Dans le cas de la commande électrostatique, en plaçant des électrodes sur chacun des quatre bras, la tension à appliquer sera donnée par :

$$V = e\sqrt{\frac{2F}{2\varepsilon_0 Lh}}$$

En prenant la même distance interélectrode, on obtient : V=47 volts, soit une tension plus de 8 fois plus faible que dans le cas précédent.

Les applications industrielles de la présente invention se situent principalement dans le domaine des télécommunications optiques, où la commutation optomécanique permet de réaliser des réseaux dits "surs". Elles se situent également dans le domaine des capteurs optomécaniques et, en particulier, dans les domaines de l'accélérométrie, de la microphonie, de la détection de vibrations, de la mesure de pression, le tout par voie optique. D'une manière générale, l'invention peut s'appliquer à tout dispositif optomécanique intégré où il

est nécessaire de déplacer mécaniquement l'extrémité d'un guide optique intégré.

## Revendications

1. Dispositif optomécanique comportant, dans une structure guidante réalisée en optique intégrée, une partie fixe (50) et une partie mobile (52, 100, 137, 152, 163, 170, 172, 174, 176), cette partie mobile étant munie de k micro-guides (70, 72, 74, 76, 162, 164, 178, 180) et étant située entre i microguides de sortie (56, 58, 182, 184) formés dans la partie fixe et j microguides d'entrée (54, 165, 167, 168) formés également dans la partie fixe, **caractérisé par le fait qu'**il comprend au moins une partie mobile comprenant une masse qui n'est reliée que par des bras (62, 64, 66, 68, 106, 108, 138, 140, 142, 144, 154, 156, 158, 160) de fixation à la partie fixe, que la partie fixe, la masse et les bras de fixation sont formés d'une pièce et qu'au moins un bras de fixation présente une souplesse suffisante suivant une première direction, de manière à ne pas entraver le déplacement de la masse selon cette direction, et une rigidité suffisante selon une deuxième direction, de manière à limiter le déplacement de la masse selon cette deuxième direction, pour permettre la commutation d'un faisceau lumineux d'un des j microguides d'entrée vers au moins un des i microguides de sortie via au moins un des k microguides de la partie mobile.

2. Dispositif selon la revendication 1, **caractérisée par le fait qu'**il comprend N parties mobiles $M_1$, $M_2$ ..., $M_n$ (170, 172) reliées à la partie fixe, ces parties mobiles étant situées entre i microguides de sortie formés dans la partie fixe et j microguides d'entrée formés également dans la partie fixe, les parties mobiles comportant chacune une masse qui n'est reliée que par des bras de fixation à la partie fixe de façon à permettre le déplacement de la masse dans une première direction et limiter son déplacement selon une deuxième direction, la masse $M_1$ comportant $k_1$ microguides de façon à pouvoir commuter un faisceau lumineux d'un des j microguides d'entrée vers un des $k_2$ microguides de la masse $M_2$, chaque masse $M_n$ (n supérieur ou égale à 2) comportant $k_n$ microguides de façon à pouvoir commuter un faisceau lumineux d'un des $k_{n-1}$ microguides de la masse $M_{n-1}$ vers un des $k_{n+1}$ microguides de la masse $M_{n+1}$, la masse $M_N$ comportant $k_N$ microguides de façon à pouvoir commuter un faisceau lumineux d'un des $k_{N-1}$ microguides de la masse $M_{N-1}$ vers un des i microguides de sortie.

3. Dispositif selon l'une des revendications 1 et 2, **caractérisé par le fait que** les première et deuxième directions sont perpendiculaires entre elles.

4. Dispositif selon l'une quelconque des revendications précédentes, **caractérisé par le fait qu'**un au moins des bras de fixation (62, 64, 66, 68) présente une forme d'équerre avec deux segments perpendiculaires l'un par rapport à l'autre.

5. Dispositif selon l'une quelconque des revendications précédentes, **caractérisé par le fait qu'**un au moins des bras de fixation comporte un corps (114, 116, 118, 120, 146) en forme de "U" avec une branche (122, 124, 126, 128, 130, 132, 134, 136, 148, 150) rajoutée à l'extrémité libre de chaque branche latérale du "U" de manière sensiblement perpendiculaire à cette branche.

6. Dispositif selon l'une quelconque des revendications précédentes, **caractérisé par le fait qu'**un au moins des bras de fixation (138, 140, 142, 144) est de forme droite.

7. Dispositif selon l'une quelconque des revendications précédentes, **caractérisé par le fait qu'** au moins deux bras de fixation (106, 108) comportent un cadre déformable (110).

8. Dispositif selon l'une quelconque des revendications précédentes, **caractérisé par le fait que** la partie mobile (152) comporte, en dehors des k microguides (162, 164), au moins un évidement (166) allégeant ladite partie mobile.

9. Commutateur optomécanique, **caractérisé par le fait qu'**il comprend au moins un dispositif selon l'une des revendications 1 à 8 ainsi que des moyens de commande (78, 80, 82, 84, 86, 88, 90 ) pour commander le déplacement de la ou d'au moins une des parties mobiles.

10. Commutateur selon la revendication 9, **caractérisé par le fait que** les moyens de commande sont des moyens électrostatiques.

11. Commutateur selon la revendication 10, **caractérisé par le fait que** les moyens de commande comprennent des électrodes étant appliquées sur au moins un bras de fixation.

12. Commutateur selon l'une quelconque des revendications 10 à 11, **caractérisé par le fait que** les moyens de commande comprennent au moins un peigne électrostatique (90) relié à la partie mobile.

13. Capteur optomécanique comprenant un dispositif selon l'une des revendications 1 à 8.

## Claims

1. Optomechanical device comprising, in a guiding structure produced in integrated optics, a fixed part (50) and a moving part (52, 100, 137, 152, 163, 170, 172, 174, 176), this moving part being provided with k microguides (70, 72, 74, 76, 162, 164, 178, 180) and lying between i output microguides (56, 58, 182, 184) that are formed in the fixed part and j input microguides (54, 165, 167, 168) that are also formed in the fixed part, **characterized in that** it includes at least one moving part comprising a mass which is connected only by arms (62, 64, 66, 68, 106, 108, 138, 140, 142, 144, 154, 156, 158, 160) for attachment to the fixed part, **in that** the fixed part, the mass and the attachment arms are formed from one piece and **in that** at least one attachment arm has sufficient flexibility in a first direction so as not to obstruct the displacement of the mass in this direction and sufficient rigidity in a second direction so as to limit the displacement of the mass in this second direction, in order to allow a light beam to be switched from one of the j input microguides to at least one of the i output microguides via at least one of the k microguides of the moving part.

2. Device according Claim 1, **characterized in that** it comprises N moving parts $M_1$, $M_2$ ..., $M_n$ (170, 172) which are connected to the fixed part, these moving parts lying between i output microguides that are formed in the fixed part and j input microguides that are also formed-in the fixed part, the moving parts each having a mass which is connected only by arms for attachment to the fixed part so as to allow displacement of the mass in a first direction and limit its displacement in a second direction, the mass $M_1$ comprising $k_1$ microguides so as to be able to switch a light beam from one of the j input microguides to one of the $k_2$ microguides of the mass $M_2$, each mass $M_n$ (n being greater than or equal to 2) comprising $k_n$ microguides so as to be able to switch a light beam from one of the $k_{n-1}$ microguides of the mass $M_{n-1}$ to one of the $k_{n+1}$ microguides of the mass $M_{n+1}$, the mass $M_N$ comprising $k_N$ microguides so as to be able to switch a light beam from one of the $k_{N-1}$ microguides of the mass $M_{N-1}$ to one of the i output microguides.

3. Device according to either of Claims 1 and 2, **characterized in that** the first and second directions are perpendicular to each other.

4. Device according to any one of the preceding claims, **characterized in that** at least one of the attachment arms (62, 64, 66, 68) is in the form of an angle bracket with two mutually perpendicular segments.

5. Device according to any one of the preceding claims, **characterized in that** at least one of the attachment arms has a body (114, 116, 118, 120, 146) in the form of a "U" with a branch (122, 124, 126, 128, 130, 132, 134, 136, 148, 150) added to the free end of each lateral branch of the "U" so as to be approximately perpendicular to this branch.

6. Device according to any one of the preceding claims, **characterized in that** at least one of the attachment arms (138, 140, 142, 144) has a straight shape.

7. Device according to any one of the preceding claims, **characterized in that** at least two of the attachment arms (106, 108) comprise a deformable frame (110).

8. Device according to any one of the preceding claims, **characterized in that** the moving part (152) has, away from the k microguides (162, 164), at least one recess (166) lightening the said moving part.

9. Optomechanical switch, **characterized in that** it comprises at least one device according to one of Claims 1 to 8 and control means (78, 80, 82, 84, 86, 88, 90) for controlling the displacement of the moving part or of at least one of the moving parts.

10. Switch according to Claim 9, **characterized in that** the control means are electrostatic means.

11. Switch according to Claim 10, **characterized in that** the control means comprise electrodes that are applied to at least one attachment arm.

12. Switch according to either of Claims 10 and 11, **characterized in that** the control means comprise at least one electrostatic comb (90) connected to the moving part.

13. Optomechanical sensor comprising a device according to one of Claims 1 to 8.

## Patentansprüche

1. Optomechanische Vorrichtung, eine in integrierter Optik ausgeführte Struktur sowie einen festen Teil (50) und einen beweglichen Teil (52, 100, 137, 152, 163, 170, 172, 174, 176) umfassend, wobei dieser bewegliche Teil mit k Mikroleitem (70, 72, 74, 76, 162, 164, 178, 180) ausgestattet ist und sich zwischen i in dem festen Teil ausgebildeten Ausgangsmikroleitern (56, 58, 182, 184) und j ebenfalls in dem festen Teil ausgebildeten Eingangsmikroleitern (54, 165, 167, 168) befindet,

**dadurch gekennzeichnet,**
**dass** sie wenigstens einen beweglichen Teil hat, der eine mit dem festen Teil nur durch Befestigungsarme (62, 64, 66, 68, 106, 108, 138, 140, 142, 144, 154, 156, 158, 160) verbundene Masse umfasst, dass der feste Teil, die Masse und die Befestigungsarme aus einem Stück gebildet sind und wenigstens ein Befestigungsarm in einer ersten Richtung so nachgiebig ist, dass er die Verschiebung der Masse in dieser Richtung nicht behindert, und in einer zweiten Richtung so steif ist, dass die Verschiebung der Masse in dieser zweiten Richtung begrenzt ist, um das Schalten eines Lichtstrahls aus einem der j Eingangsmikroleiter über die k Mikroleiter des beweglichen Teils auf wenigstens einen der i Ausgangsmikroleiter zu ermöglichen.

2. Vorrichtung nach Anspruch 1, **dadurch gekennzeichnet, dass** sie N mit dem festen Teil verbundene bewegliche Teile $M_1$, $M_2$, ..., $M_n$ (170, 172) umfasst, wobei diese beweglichen Teile sich zwischen i in dem festen Teil ausgebildeten Ausgangsmikroleitem und j ebenfalls in dem festen Teil ausgebildeten Eingangsmikroleitern befinden, wobei jeder der beweglichen Teile eine Masse umfasst, die mit dem festen Teil nur durch Befestigungsarme so verbunden ist, dass die Verschiebung der Masse in einer ersten Richtung nicht behindert wird und ihre Verschiebung in dieser zweiten Richtung begrenzt ist, wobei die Masse $M_1$ $k_1$ Mikroleiter umfasst, um einen Lichtstrahl aus einem der j Eingangsmikroleiter auf einen der $k_2$ Mikroleiter der Masse $M_2$ schalten zu können, wobei jede Masse $M_n$ (n größer als 2 oder gleich) $k_n$ Mikroleiter umfasst, um einen Lichtstrahl aus einem der $k_{n-1}$ Mikroleiter der Masse $M_{n-1}$ auf einen der $k_{n+1}$ Mikroleiter der Masse $M_{n+1}$ schalten zu können, und die Masse $M_N$ $k_N$ Mikroleiter umfasst, um einen Lichtstrahl aus einem der $k_{N-1}$ Mikroleiter der Masse $M_{N-1}$ auf einen der i Ausgangsmikroleiter schalten zu können.

3. Vorrichtung nach einem der Ansprüche 1 und 2, **dadurch gekennzeichnet, dass** die erste und die zweite Richtung senkrecht zueinander sind.

4. Vorrichtung nach einem der vorangehenden Ansprüche, **dadurch gekennzeichnet, dass** wenigstens einer der Befestigungsarme (62, 64, 66, 68) die Form eines Winkels hat, mit zwei zueinander senkrechten Segmenten.

5. Vorrichtung nach einem der vorangehenden Ansprüche, **dadurch gekennzeichnet, dass** wenigstens einer der Befestigungsarme ein "U"-förmiges Element (114, 116, 118, 120, 146) mit einem an dem freien Ende jedes Schenkels des "U" angefügten Zweig (122, 124, 126, 128, 130, 132, 134, 136, 148, 150) umfasst, der im Wesentlichen senkrecht ist zu diesem Schenkel.

6. Vorrichtung nach einem der vorangehenden Ansprüche, **dadurch gekennzeichnet, dass** wenigstens einer der Befestigungsarme (138, 140, 142, 144) von gerader Form ist.

7. Vorrichtung nach einem der vorangehenden Ansprüche, **dadurch gekennzeichnet, dass** wenigstens zwei Befestigungsarme (106, 108) einen verformbaren Rahmen (110) umfassen.

8. Vorrichtung nach einem der vorangehenden Ansprüche, **dadurch gekennzeichnet, dass** der bewegliche Teil (152) außerhalb der k Mikroleiter (162, 164) wenigstens eine Aussparung (166) umfasst, die diesen beweglichen Teil leichter macht.

9. Optomechanischer Schalter, **dadurch gekennzeichnet, dass** er wenigstens eine Vorrichtung nach einem der Ansprüche 1 bis 8 sowie Steuereinrichtungen (78, 80, 82, 84, 86, 88, 90) umfasst, um die Verschiebung des beweglichen Teils oder wenigstens eines der beweglichen Teile zu steuern.

10. Schalter nach Anspruch 9, **dadurch gekennzeichnet, dass** die Steuereinrichtungen elektrostatische Einrichtungen sind.

11. Schalter nach Anspruch 10, **dadurch gekennzeichnet, dass** die Steuereinrichtungen Elektroden umfassen, angebracht auf wenigstens einem Befestigungsarme.

12. Schalter nach einem der Ansprüche 10 und 11, **dadurch gekennzeichnet, dass** die Steuereinrichtungen wenigstens einen mit dem beweglichen Teil verbundenen elektrostatischen Kamm (90) umfassen.

13. Optomechanischer Sensor mit einer Vorrichtung nach einem der Ansprüche 1 bis 8.

FIG. 1

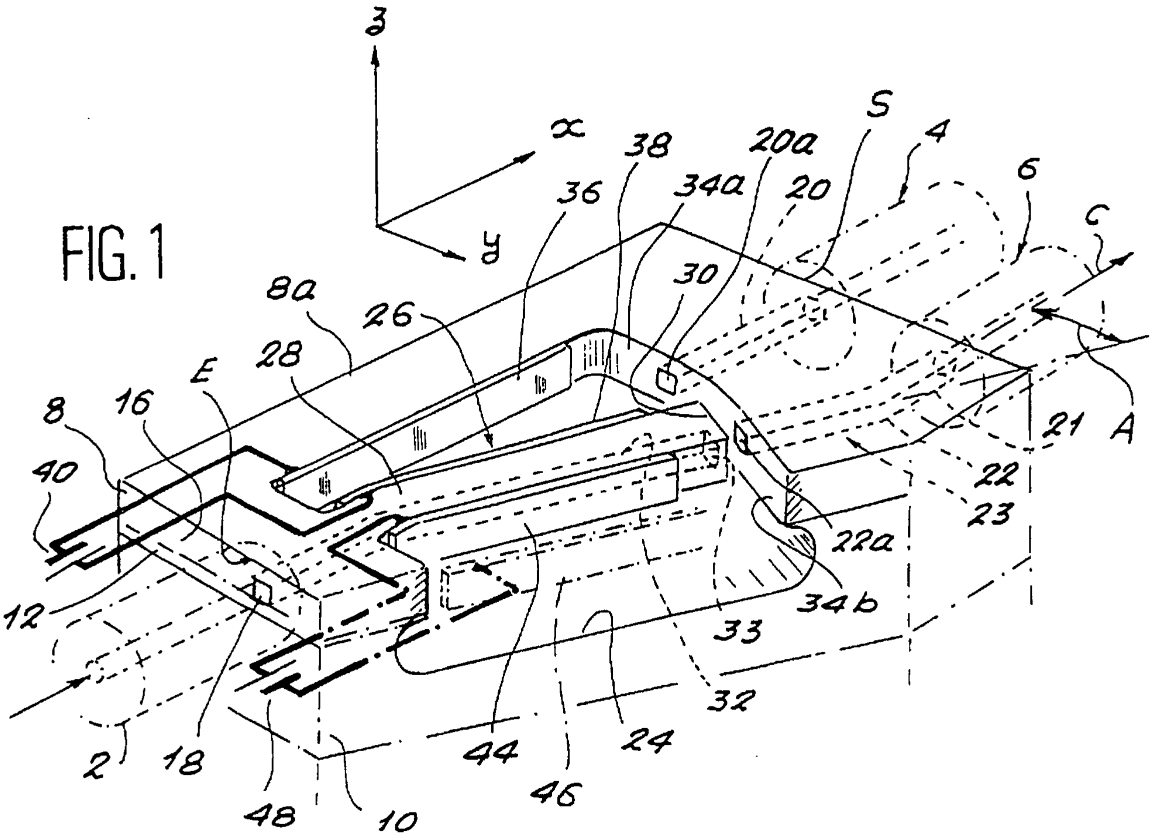


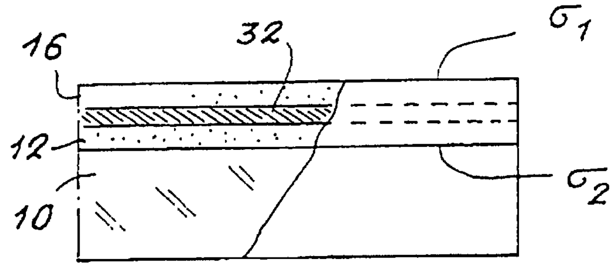


FIG. 2 a

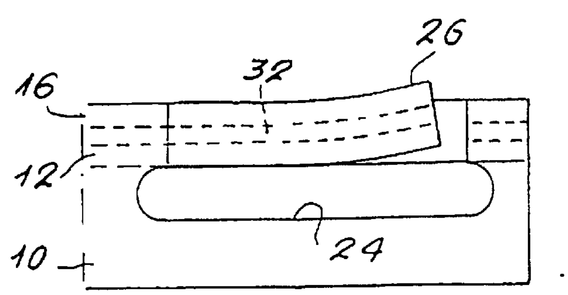


FIG. 2 b

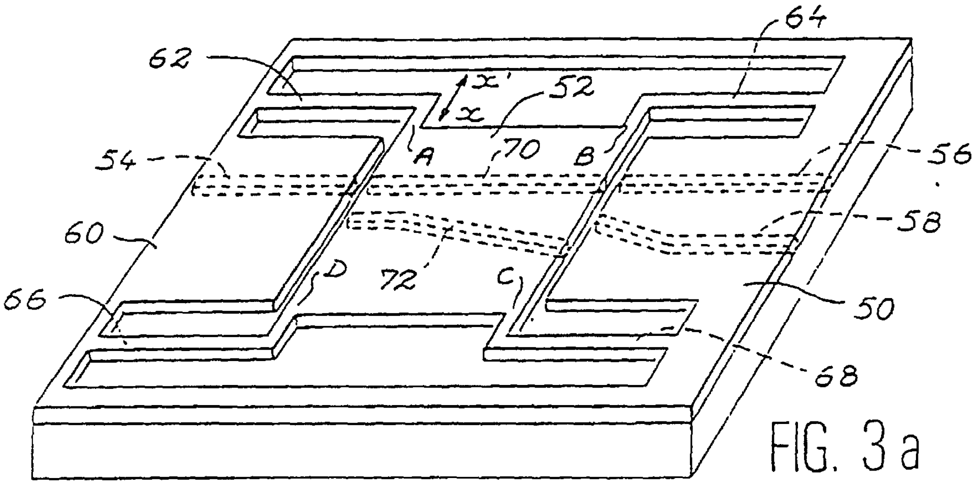


FIG. 3a

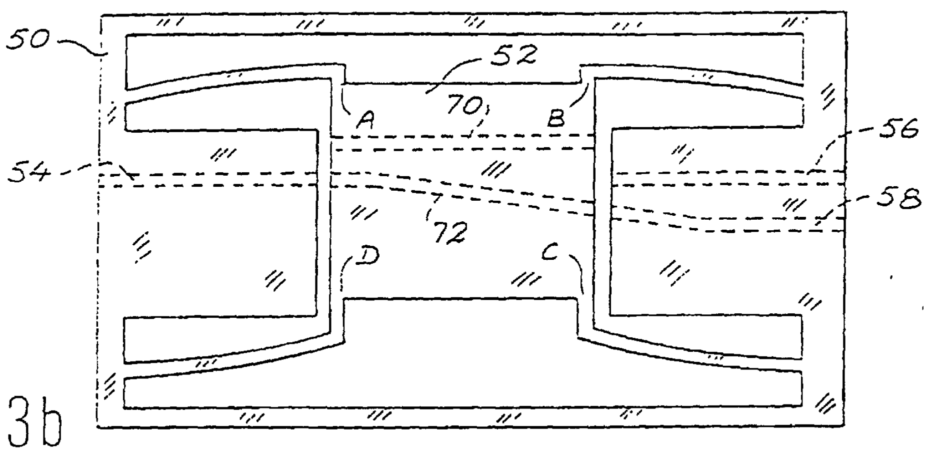


FIG. 3b

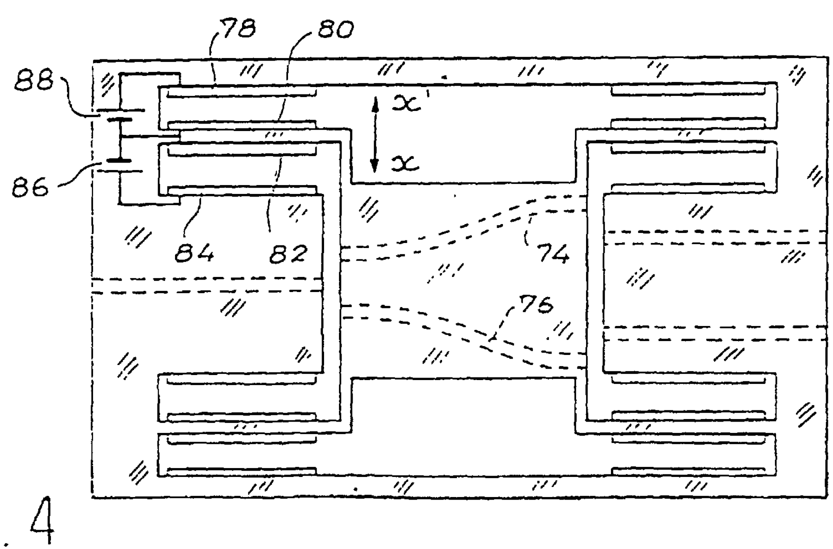


FIG. 4

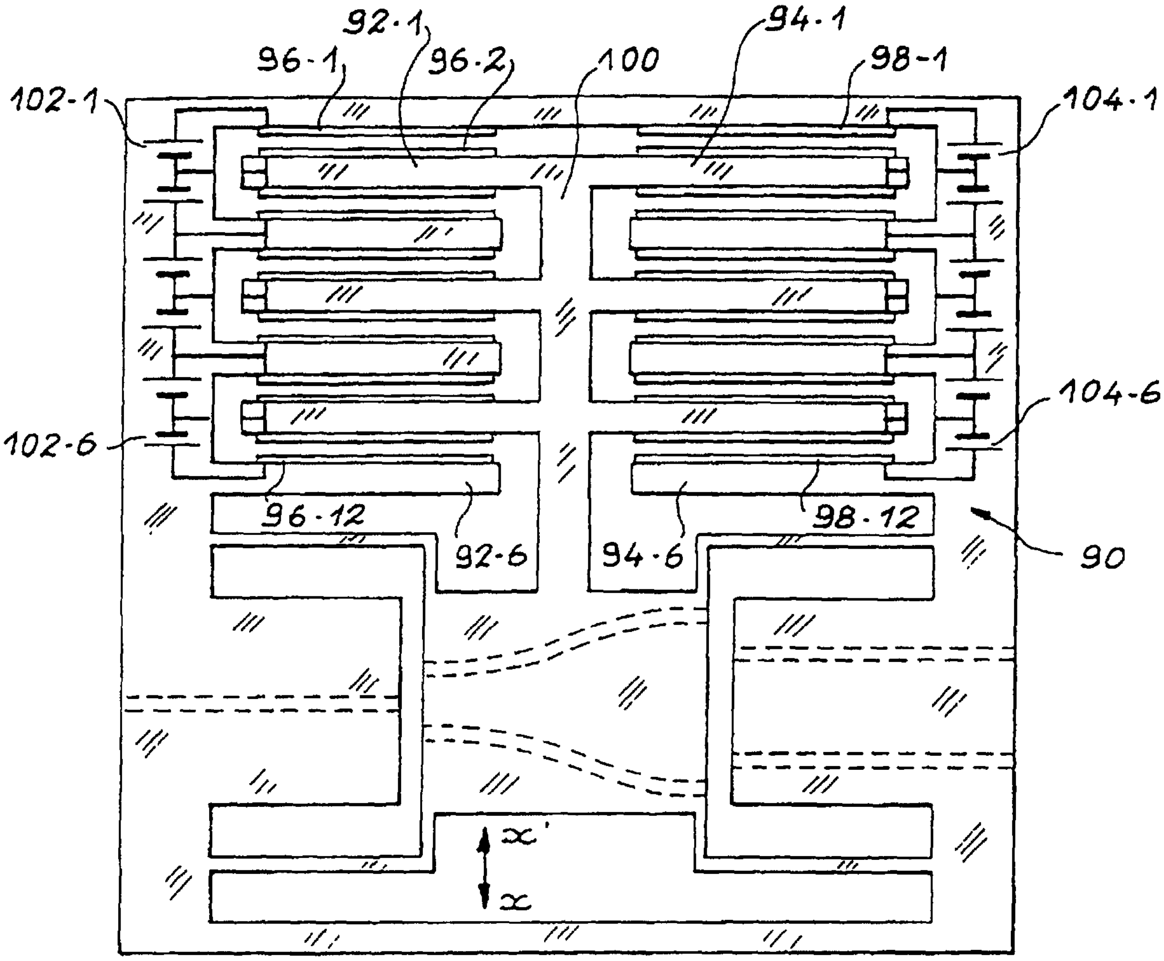
92·1
96·1
96·2
100
94·1
98-1
102-1
104·1
104-6
102-6
96·12
92-6
94·6
98·12
90
x'
x

FIG. 5a

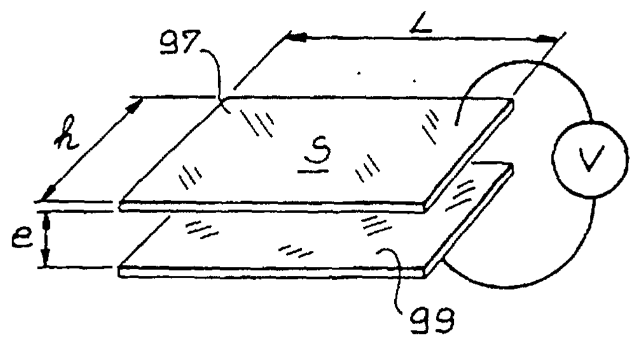
L
97
h
S
V
e
99

FIG. 5b

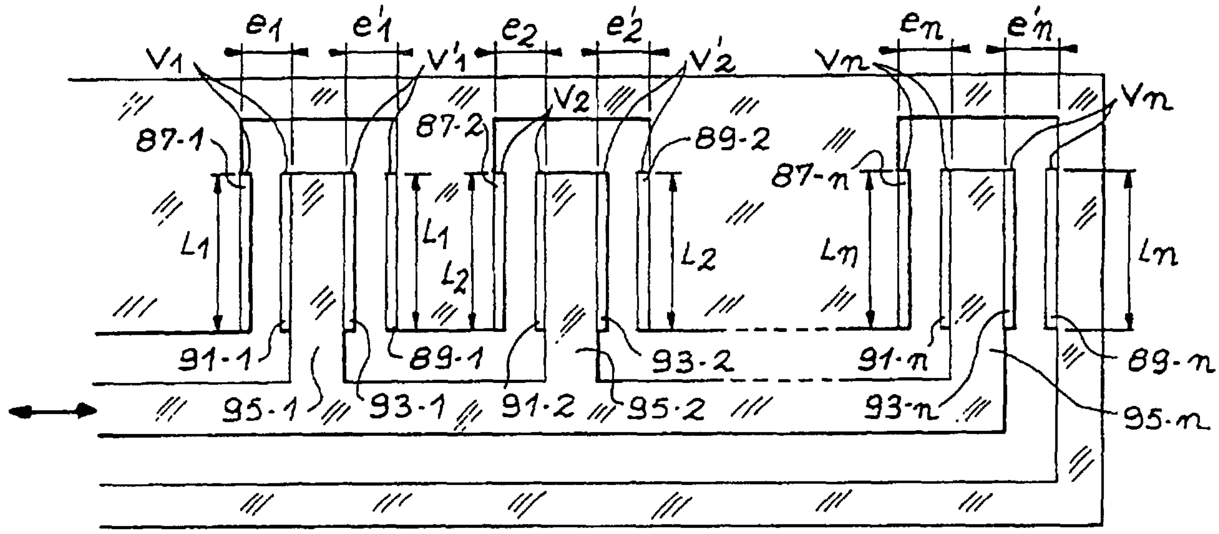
e1
e'1
e2
e'2
en
e'n
V1
V'1
V2
V'2
Vn
Vn
87-1
87-2
89-2
87-n
L1
L1
L2
L2
Ln
Ln
91-1
89-1
91-2
93-2
91-n
89-n
95-1
93-1
95-2
93-n
95-n

FIG. 5c

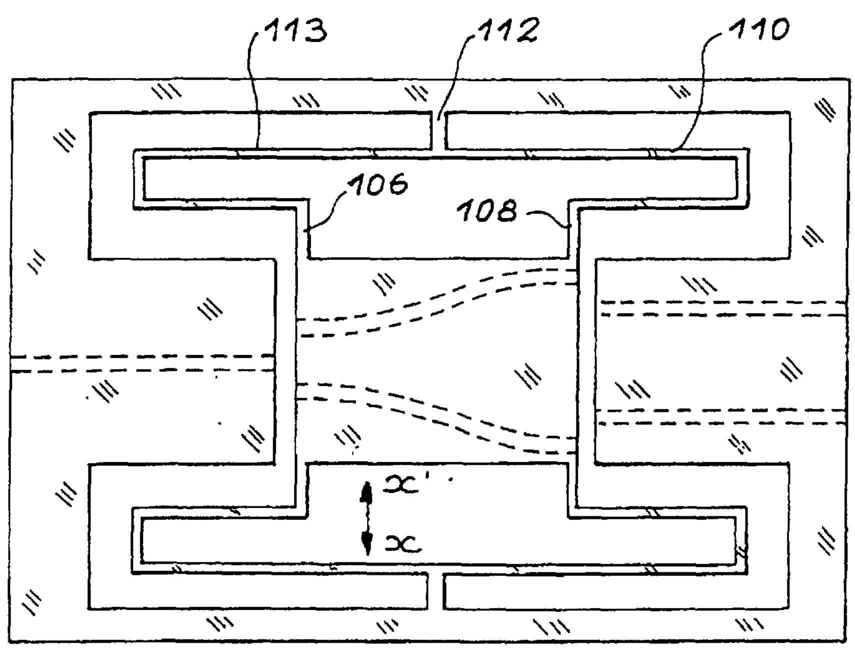
113
112
110
106
108
x'
x

FIG. 6

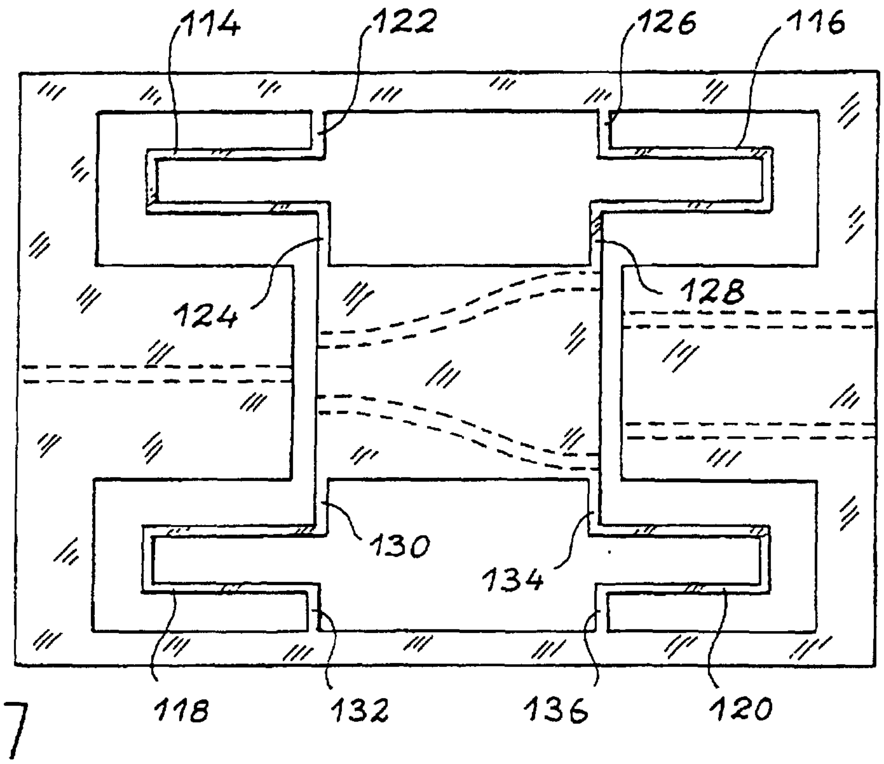
114
122
126
116
124
128
130
134
118
132
136
120

FIG. 7

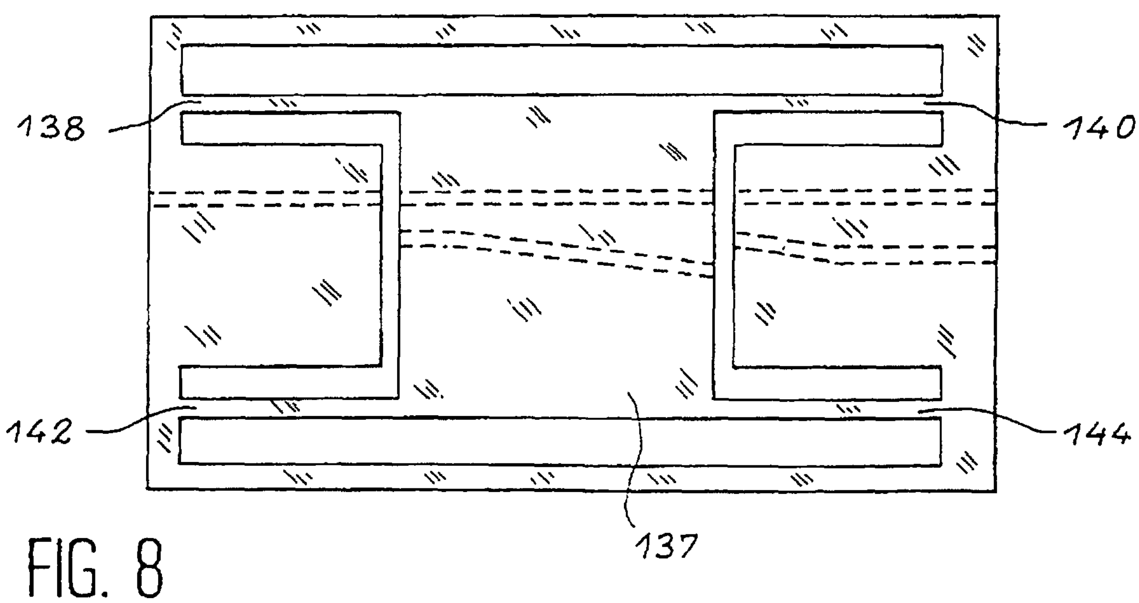
138
140
142
144
137

FIG. 8

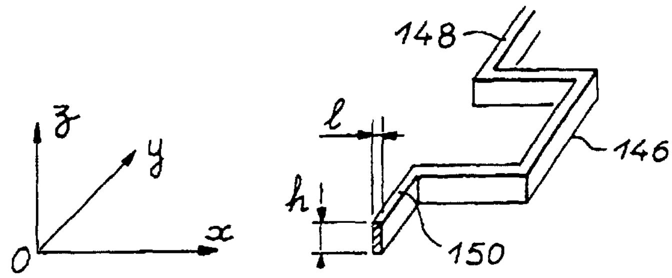


FIG. 9

FIG. 10

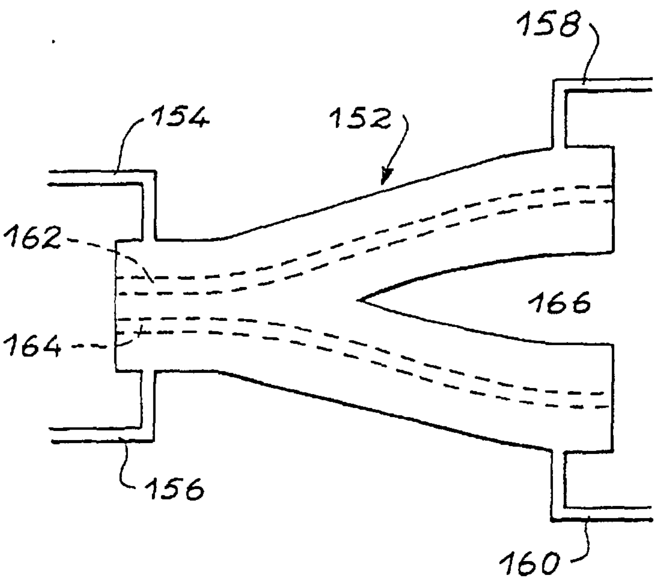


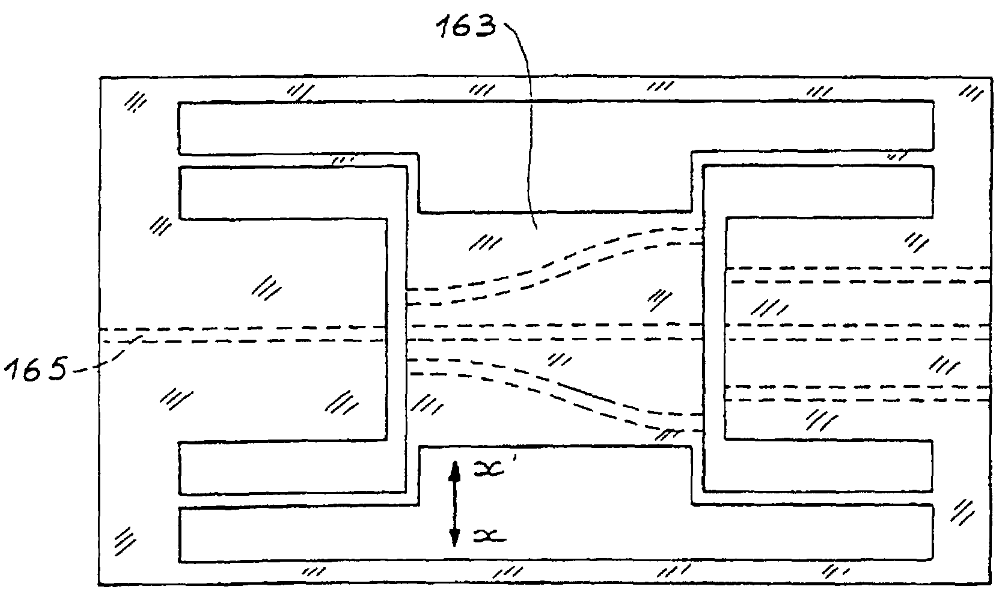


FIG. 11

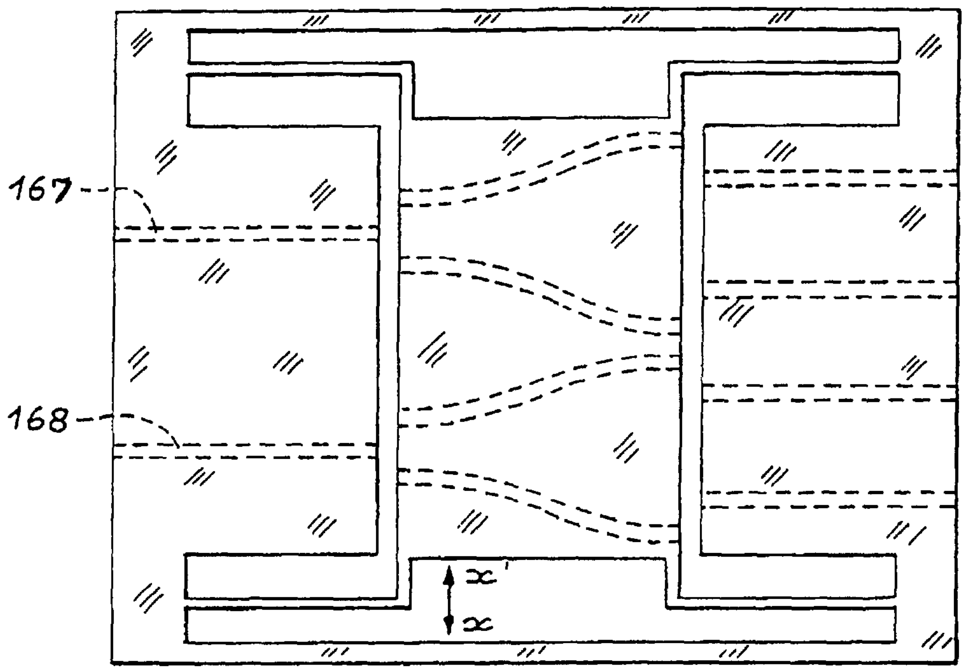


FIG. 12

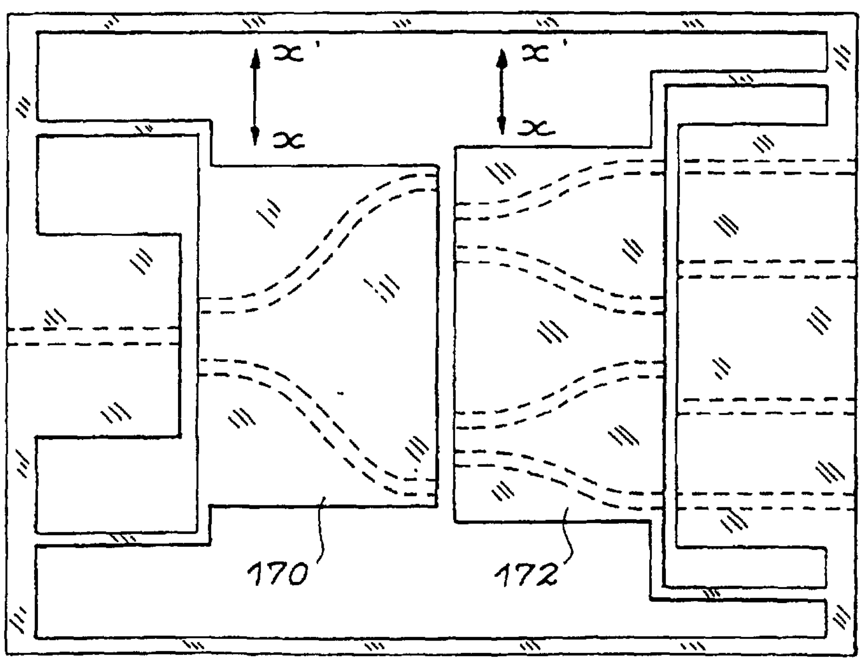


FIG. 13

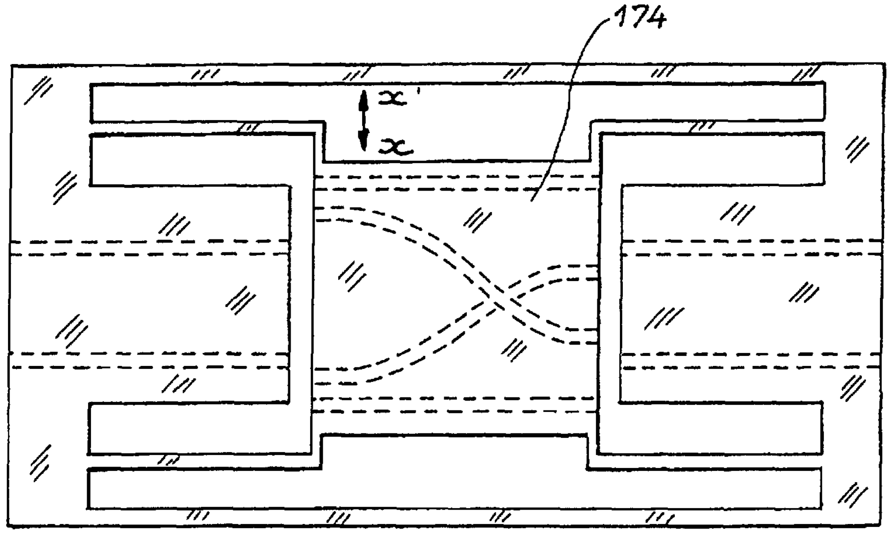


FIG. 14

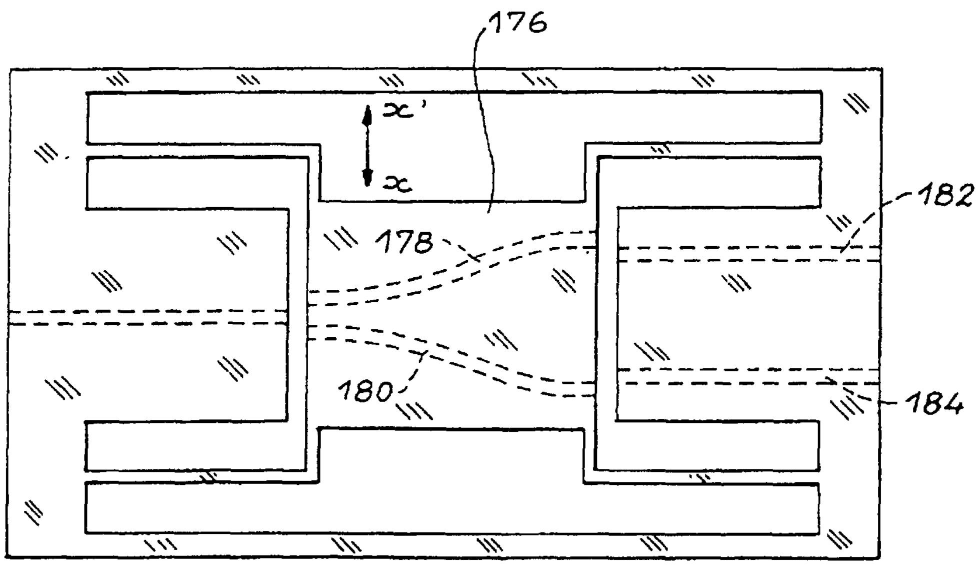


FIG. 15

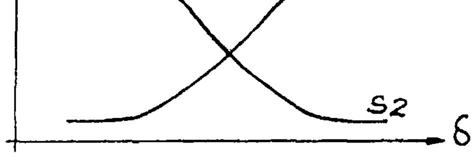


FIG. 16a

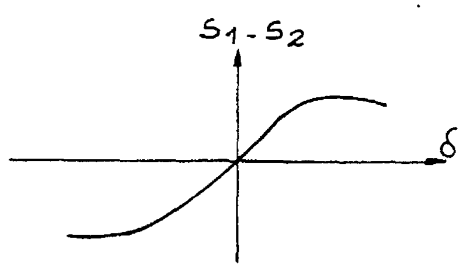


FIG. 16b